# EUROPÄISCHE PATENTSCHRIFT

(11) **EP 3 548 344 B1**
(45) Veröffentlichungstag und Bekanntmachung des Hinweises auf die Patenterteilung: **07.02.2024**
(21) Anmeldenummer: 17808447.1
(22) Anmeldetag: 01.12.2017
(51) Int. Cl.: B60T 3/00, B64F 1/16

(54) **RADKEIL ZUM BLOCKIEREN EINES STEHENDEN RADES**
WHEEL CHOCK FOR BLOCKING A STANDING WHEEL
CALE DE ROUE SERVANT À BLOQUER UNE ROUE EN POSITION VERTICALE

(30) Priorität: 02.12.2016 CH 15802016
(43) Veröffentlichungstag der Anmeldung: 09.10.2019
(73) Patentinhaber: Satcom, 6900 Lugano (CH)
(72) Erfinder: STIEGER, Daniel, 68640 Muespach (FR)
(74) Vertreter: Braun, André jr.
(86) Internationale Anmeldenummer: PCT/EP2017/081115
(87) Internationale Veröffentlichungsnummer: WO 2018/100130

(56) Entgegenhaltungen:
- CH-A- 300 232
- DE-C- 633 272
- FR-A- 795 805
- FR-A- 806 221
- US-A- 2 240 512
- US-A- 2 816 627

## Beschreibung

Die Erfindung betrifft einen Radkeil zum Blockieren eines stehenden Rades, der eine Bodenfläche zur Auflage auf einem Boden und eine Radfläche zur Anlage am Rad aufweist, wobei die Radfläche zum Blockieren des Rades gewinkelt zur Bodenfläche vorgesehen ist.

Zum Blockieren der Räder eines Fahrzeugs oder auch eines Flugzeugs ist es bekannt einen Keil zwischen wenigstens einem der Räder und dem Boden einzuklemmen, so dass das Rad blockiert und am Rollen gehindert ist. Derartige Keile werden auch Radschuh genannt. Es gibt unterschiedliche Dimensionen von Radkeilen, die sich am Einsatzgebiet des Radkeils orientieren, insbesondere an der Grösse des Rades, das blockiert werden soll. Für eine verbesserte Sicherung des Fahr- oder Flugzeugs werden Radkeile oftmals an gegenüberliegenden Seiten eines Rades und an mehreren Rädern vorgesehen.

Die Radkeile müssen einer grossen Krafteinwirkung standnhalten, wenn eine Kraft vom Fahrzeug oder Flugzeug über das Rad auf den Radkeil übertragen wird. Sie sind daher oftmals schwer und klobig, so dass sie nur bedingt transportiert und verstaut werden können. Insbesondere wenn mehrere Radkeile zur Sicherung des Fahr- oder Flugzeugs verwendet werden, beanspruchen die Radkeile beim Verstauen viel Platz

Aus der DE 202008008588 ist zum Beispiel ein Radkeil bekannt, der überwiegend aus Kunststoff gefertig ist. Für eine zuverlässige Sicherung des Keils sind Teilbereiche jedoch aus Metall gefertigt, so dass der Gewichtsvorteil des Kunststoffs reduziert wird. Der Radkeil ist wie üblich als dreieckförmiger Klotz ausgebildet und verbraucht daher bei der Lagerung viel Stauraum.

Weitere Beispiele von Radkeilen sind aus DE 633 272 C, FR 795 805 A, US 2 240 512 A und US 2 816 627 A bekannt.

Es ist eine Aufgabe der vorliegenden Erfindung, einen Radkeil zur Verfügung zu Stellen, der ein zuverlässiges Blockieren eines Rades ermöglicht, bei der Lagerung wenig Platz beansprucht, einfach in der Handhabung ist und eine robuste Bauweise aufweist.

Diese Aufgabe wird erfindungsgemäss durch einen Radkeil nach Anspruch 1 gelöst. Vorteilhafte Ausgestaltungen und unterschiedliche Ausführungsformen der Erfindung gehen aus den Unteransprüchen hervor.

Ein Radkeil zum Blockieren eines stehenden Rades nach der vorliegenden Erfindung umfasst eine Bodenfläche zur Auflage auf einem Boden, z. B. einer Strasse, und eine Radfläche zur Anlage am zu blockierenden Rad. Erfindungsgemäss sind Radfläche und Bodenfläche über ein Scharnier miteinander verbunden, so dass der Radkeil faltbar ausgestaltet ist, d. h. Radfläche und Bodenfläche können zusammengeklappt werden. In einer Gebrauchsstellung ist der Radkeil aufgefaltet und Radfläche und Bodenfläche sind zum Blockieren des Rades gewinkelt zueinander fixiert. In einer Faltposition sind Radfläche und Bodenfläche zusammengeklappt und liegen zumindest annähernd parallel aufeinander.

Erfindungsgemäss ist eine Arretiereinrichtung an der Bodenfläche und/oder der Radfläche derart beweglich angeordnet, dass sie in einer Arretierstellung Bodenfläche und Radfläche in einem aufgefalteten, gewinkelten Zustand arretiert und in einer Faltposition des Radkeils Bodenfläche und Radfläche zum Zusammenfalten frei gibt.

Durch das Zusammenklappen kann das Volumen des Radkeils deutlich reduziert werden, so dass sein Platzbedarf bei der Lagerung reduziert ist. Ferner können mehrere Radkeile in der flachen Faltposition aufeinander gestapelt werden. Im Einsatz zum Blockieren eines Rades sind die Radkeile durch die Arretiereinrichtung sicher in ihrer Keilform fixiert und bieten eine zuverlässige Blockierung des Rades.

Radfläche und Bodenfläche sind vorzugsweise als starre ebene Platten ausgebildet, so dass sie im gefalteten Zustand aufeinander zu liegen kommen können. Vorteilhaft sind Radfläche und Bodenfläche identisch ausgebildet, sodass die Flächen nur durch ihre Funktion identifiziert sind. Durch einfaches Umdrehen des Radkeils werden somit Boden- und Radfläche vertauscht. Grundsätzlich ist es aber auch möglich, dass die Platten eine leichte Wölbung aufweisen. Insbesondere bei der Radfläche kann damit die Anlage am Rad verbessert werden.

In einer Ausführungsform weist die Arretiereinrichtung wenigstens einen Stützträger auf, der gelenkig an Boden- oder Radfläche angeordnet ist und in einer Arretierstellung die Bodenfläche und die Radfläche gewinkelt zueinander abstützt. Der Stützträger kann sich dabei an der gegenüberliegenden Fläche abstützen, also z. B. an der Radfläche, wenn der Stützträger an der Bodenfläche angeordnet ist. Alternativ kann sich der Stützträger an einer Fläche eines zusätzlichen Bauteils abstützen. Zur Sicherung in der Arretierstellung kann der Stützträger lösbar an der Fläche fixiert werden. Beispielsweise kann ein Anschlag oder eine Steck- oder Schnappfixierung vorgesehen werden.

In einer weiteren Ausgestaltung des erfindungsgemässen Radkeils weist die Arretiereinrichtung eine starre Arretierfläche und wenigstens einen Stützträger auf. Die Arretierfläche, als zusätzliches Bauteil zu Rad- und Bodenfläche, kann beispielsweise in Form einer Platte oder eines Stab ausgebildet sein. Der Stützträger ist erfindunggemäß an seinem einem Ende gelenkig an der Arretierfläche und an seinem anderen Ende gelenkig an Boden- bzw. Radfläche gelagert. In einer Faltposition von Boden- und Radfläche verlaufen die Arretierfläche und vorzugsweise auch der Stützträger zumindest annähernd parallel zu Boden- bzw. Radfläche. In der Arretierstellung hingegen sind Arretierfläche, Stützträger und Boden- bzw. Radfläche dreieckförmig angeordnet, d. h. sie spannen einen Keil auf. Es wird betont, dass die Arretierfläche nicht direkt an der Radfläche oder der Bodenfläche angebracht ist, sondern nur über den Stützträger verbunden ist. Der Stützträger dient als Schwenkarm, mit dem die Arretierfläche relativ zu Boden- und Radfläche beweglich ist. Dabei kann die Arretierfläche von Rad- bzw. Bodenfläche abgehoben und gleichzeitig parallel dazu bewegt werden. Zusätzlich dient der Stützträger zum Abstützen der Arretierfläche in einer Arretierstellung. Dadurch wird die Beweglichkeit des Radkeils verbessert und dieser kann in einfacher Weise zusammengefaltet werden.

Erfindungsgemäß schlägt die Arretierfläche in der Arretierstellung mit einem Ende an einem Anschlag an Boden- bzw. Radfläche an; vorzugweise an der Boden- bzw. Radfläche an der auch der Stützträger beweglich gelagert ist. Dabei bilden Arretierfläche, Stützträger und Boden- bzw. Radfläche ein Dreieck. In der Faltposition ist dieses Ende der Arretierfläche von dem Anschlag entfernt und der Radkeil kann zusammengeklappt werden. Erfindungsgemäß bildet das Scharnier zwischen Bodenfläche und Radfläche den Anschlag. Somit sind keine zusätzlichen baulichen Massnahmen erforderlich, um den Anschlag zu realisieren.

In einer bevorzugten Ausführungsform eines Radkeils nach der vorliegenden Erfindung sind zwei Stützträger vorgesehen, die jeweils mit einem Ende an gegenüberliegenden Seiten einer Arretierfläche gelagert sind. Ein erster Stützträger ist mit seinem anderen Ende an der Bodenfläche und ein zweiter Stützträger mit seinem anderen Ende an der Radfläche gelagert. Die Anordnung bildet somit eine symmetrische, spiegelbildliche Geometrie um die Arretierfläche. Wie vorher erwähnt, können vorteilhaft die Bodenfläche und die Radfläche identisch sein, so dass sie miteinander austauschbar sind. Die Stützträger haben die gleiche Länge, so dass die Arretierfläche mittig zwischen Rad- und Bodenfläche angeordnet ist. Durch die gelenkige Verbindung der Arretierfläche mit der Radfläche und der Bodenfläche mittels der Stützträger kann die Arretierfläche in Längsrichtung zu Rad- und Bodenfläche aus diesen herausgezogen und in diese hineingeschoben werden. Dabei werden Rad- und Bodenfläche schirmartig aufgespannt oder zusammengeklappt. Zum Aufspannen wird die Arretierfläche zwischen die Rad- und Bodenfläche hineingeschoben bis sie am Scharnier anschlägt. In dieser Stellung sind Rad- und Bodenfläche in aufgefaltetem Zustand arretiert und der Radkeil ist einsatzbereit, um ein Rad zu blockieren.

In einer vorteilhaften Ausgestaltung des Radkeils ist die Geometrie zwischen Bodenfläche, Radfläche und Stützträger derart ausgelegt, dass eine Last eines Rades, das gegen die Radfläche drückt, den Radkeil in seine Arretierstellung presst. Die Radlast wirkt grundsätzlich in Richtung der Normalen der Radfläche, d. h. senkrecht zur Radfläche. Die Längen von Stützträger, Bodenfläche und Radfläche sind also derart ausgelegt, dass die Lastkraft in eine Kraft umgelenkt wird, welche den Stützträger, bzw. die Arretierfläche, in die Arretierstellung drückt, insbesondere die Arretierfläche gegen ihren Anschlag presst. Ein Kraftvektor in Richtung der Normalen der Radfläche schliesst also mit dem wenigstens einen Stützträger einen Winkel derart ein, dass die Arretiereinrichtung in eine Arretierstellung gezwungen ist.

Bei der oben geschilderten Ausführungsform mit zwei symmetrisch an der Arretierfläche gelagerten Stützträgern ist hierfür ein Winkel zwischen den Stützträgern und der Arretierfläche grösser als 90° vorgesehen. Dadurch wird der Kraftvektor in Richtung der Normalen der Radfläche wenigstens teilweise in eine Schubkraft transformiert, welche die Arretierfläche in den Anschlag schiebt, in diesem Fall gegen das Scharnier zwischen Radfläche und Bodenfläche. Die Radlast dient damit als zusätzliche Sicherung des Radkeils in seiner Keilposition, so dass ein ungewolltes Zusammenklappen verhindert wird.

In einer Variante eines Radkeils nach der Erfindung besteht wenigstens die Radfläche und vorzugsweise auch die Bodenfläche aus Aluminium. Besonders bevorzugt besteht der gesamte Radkeil aus Aluminium. Aluminium erlaubt eine leichte Bauweise. Darüber hinaus ermöglicht Aluminium das Ableiten von statischer Ladung von Fahrzeugen zum Boden. Ferner entsteht keine Funkenbildung, falls der Radkeil über den Boden reibt. Weiter ist Aluminium unempfindlich gegen Verschmutzungen, wie etwa Öle, Kerosin, Enteisungsflüssigkeiten, etc. die auf dem Boden vorhanden sein können.

Alternative kann der Radkeil aus einem rostfreien Metall oder einem Kompositwerkstoff besteht. Rostfreie Metalle haben den Vorteil, dass sie sehr robust und langlebig sind. Heutige Kompositwerkstoffe weisen eine ausreichende Steifigkeit auf, um ein Rad zu blockieren und ermöglichen zudem ein geringes Gewicht des Radkeils.

In einer Ausführungsform weist der Radkeil vorteilhaft auf der Bodenfläche Spikes aus Hartmetall auf, um ein Wegrutschen auf glattem oder vereistem Untergrund zu verhindern.

Bei noch einer weiteren Ausführungsform des Radkeils nach der Erfindung kann die Arretierfläche an ihrem dem Anschlagende gegenüberliegenden Ende einen Griff aufweisen. Die Länge der Arretierfläche ist derart abgestimmt, dass der Griff in der Arretierstellung und in der Faltposition über die Bodenfläche und die Radfläche hinaussteht. Somit ist der Griff zur Betätigung der Arretierfläche sowohl in gefaltetem Zustand als auch in aufgeklapptem Zustand des Radkeils zugänglich. Mit dem Griff kann die Arretierfläche in einfacher Weise aus der Arretierstellung, d. h. vom Anschlag weg, gezogen werden. Ein Verkeilen kann damit schnell gelöst und der Radkeil kann verstaut werden. Umgekehrt kann der Radkeil durch Vorschieben am Griff in Richtung unter das Rad im aufgefalteten Zustand gesichert werden. Durch das Vorschieben am Griff wird die Arretierfläche gegen ihren Anschlag gedrängt.

In einer weiteren vorteilhaften Ausführungsform umfasst der Radkeil an der Arretierfläche eine lösbare Sicherungsverbindung, die sich zur Sicherung der Arretierfläche in der Arretierstellung von der Arretierfläche in Richtung des Anschlags erstreckt. Vorzugsweise ist die Sicherungsverbindung als eine elastische Zugverbindung ausgebildet, beispielsweise als Gummiband. Mit der Zugkraft der gespannten Sicherungsverbindung kann die Arretierfläche gegen den Anschlag gepresst werden. Die Sicherungsverbindung kann am Radkeil selbst befestigt werden, beispielsweise im Bereich des Anschlags oder des Scharniers. Vorteilhaft kann die Sicherungsverbindung auch am Rad befestigt werden, das durch den Radkeil blockiert werden soll.

Vorzugsweise wird ein Paar von Radkeilen vorgesehen, wobei jeweils ein Radkeil an gegenüberliegenden Seiten eines Rads positioniert wird. In diesem Fall kann sich die Sicherungsverbindung von einem Radkeil zum gegenüberliegenden erstrecken und an diesem befestigt werden. Vorteil hat kann dabei die selbe Sicherungsverbindung für beide Radkeile verwendet werden, indem sie sich von einer Arretierfläche des einen Radkeils zur Arretierfläche des gegenüberliegenden Radkeils erstreckt. Dadurch können beide Radkeile gleichzeitig in ihrer Arretierstellung gesichert werden und sie können auch gleichzeitig aus dieser Sicherung gelöst werden.

Die Erfindung wird im Folgenden anhand der Figuren dargestellt, die lediglich zur Erläuterung dienen sollen und nicht einschränkend auszulegen sind. In den Zeichnungen zeigen:
- Fig. 1: eine dreidimensionale Darstellung einer Ausführungsform eines Radkeils nach der vorliegenden Erfindung in aufgefaltetem Zustand,
- Fig. 2: eine Explosionsdarstellung des Radkeils aus Figur 1,
- Fig. 3: eine Seitenansicht des Radkeils aus Figur 1 und
- Fig. 4: eine Darstellung des Radkeils aus Figur 1 in zusammengefaltetem Zustand.

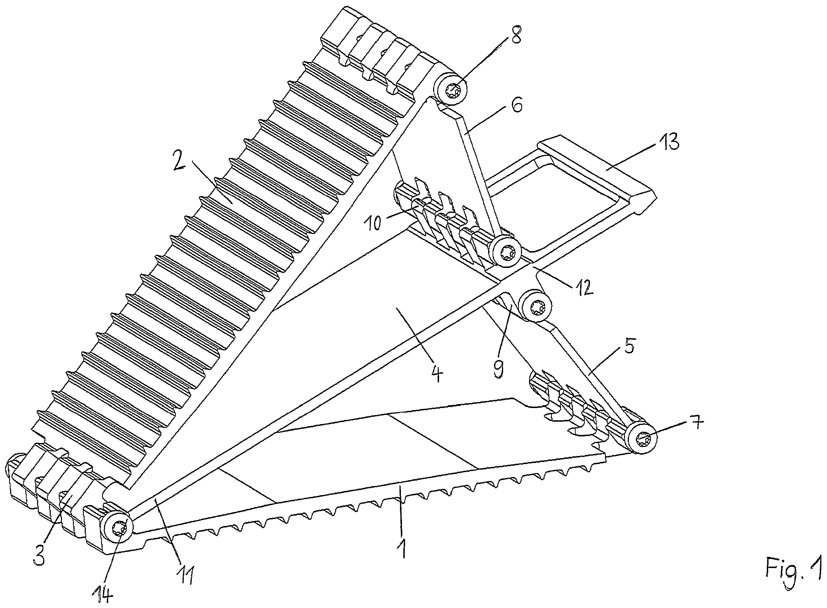

In Figur 1 ist eine Ausführungsform eines faltbaren Radkeils zum Blockieren eines stehenden Rades nach der vorliegenden Erfindung gezeigt. Der Radkeil weist eine Bodenfläche 1 und eine Radfläche 2 auf, die an einem Ende mittels eines Scharniers 3 verbunden sind. Mit dem Scharnier 3 können die Bodenfläche 1 und die Radfläche 2 relativ zueinander aufgeklappt werden. Das Scharnier ist derart ausgelegt, dass die inneren Flächen von Bodenfläche 1 und Radfläche 2 aufeinander zu liegen kommen können.

Weiter weist der Radkeil eine Arretiereinrichtung auf, die an der Bodenfläche oder der Radfläche beweglich angeordnet ist. Die Arretiereinrichtung umfasst eine Arretierfläche 4, einen ersten Stützträger 5 und einen zweiten Stützträger 6. Die Stützträger 5 und 6 sind in dieser Variante als starre Stützplatten ausgebildet. Der erste Stützträger 5 ist mit einem Gelenk 7 schwenkbar an der Bodenfläche 1 gelagert und zwar am Ende, das dem Scharnier 3 gegenüberliegt. In symmetrischer Weise ist der zweite Stützträger 6 mit einem Gelenk 8 schwenkbar an der Radfläche 2 gelagert, wiederum am Ende, das dem Scharnier 3 gegenüberliegt. An ihren den Gelenken 7 und 8 gegenüberliegenden Enden sind der erste Stützträger 5 und der zweite Stützträger 6 jeweils über Gelenke 9 und 10 an der Arretierfläche 4 gelagert. Die Gelenke 9 und 10 sind an gegenüberliegenden Seiten der Arretierfläche 4 vorgesehen. Eine Verbindung der Arretierfläche 4 mit der Bodenfläche 1 oder der Radfläche 2 ist nicht vorgesehen.

Durch die Stützträger 5 und 6 und die Gelenke 7, 8, 9 und 10 ist die Bewegung der Arretierfläche 4 relative zu Bodenfläche 1 und Radfläche 2 jedoch festgelegt. Die Arretierfläche 4 kann parallel zu Bodenfläche 1 und Radfläche 2 verlagert werden und die Stützträger 5 und 6 relative dazu verschwenkt werden. Ein erstes Ende 11 der Arretierfläche 4 ragt dabei in Richtung des Scharniers 3 zwischen Bodenfläche 1 und Radfläche 2. Am zweiten, gegenüberliegenden Ende 12 der Arretierfläche 4 ist ein Griff 13 vorgesehen, mit dem die Arretierfläche 4 relative zu Bodenfläche 1 und Radfläche 2 manuell bewegt werden kann.

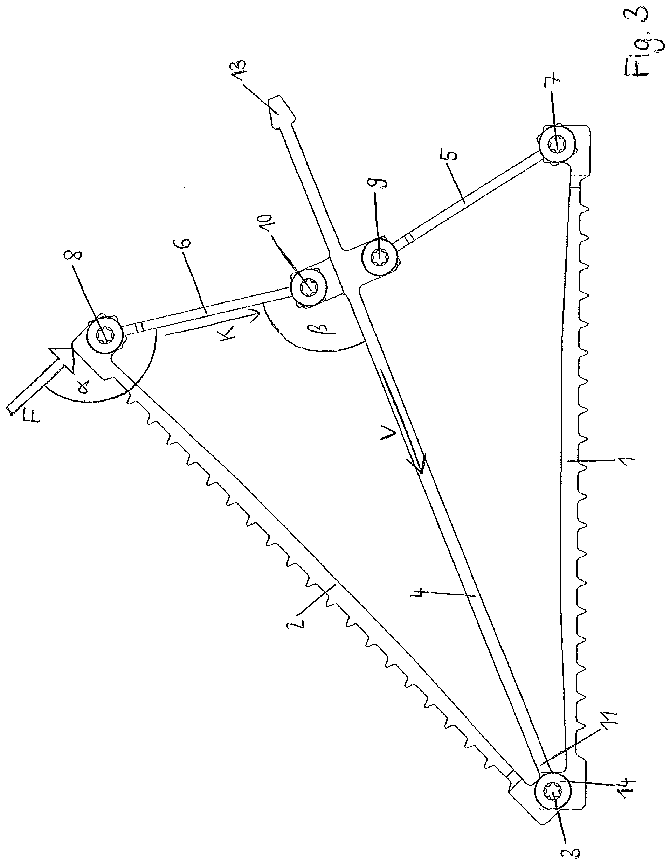

In Figur 1 ist der Radkeil in einer Arretierstellung gezeigt, in der die Bodenfläche 1 und die Radfläche 2 in einem aufgefalteten, gewinkelten Zustand arretiert sind. Bei dieser Variante des Radkeils wird die Arretierung dadurch erzielt, dass das erste Ende 11 der Arretierfläche 4 gegen das Scharnier 3 anschlägt, welche Bodenfläche 1 und Radfläche 2 verbindet. Das Scharnier bildet somit auf seiner Innenseite zwischen Bodenfläche und Radfläche einen Anschlag 14 für die Arretierfläche 4. Die steifen Stützträger 5 und 6 spreizen die Bodenfläche 1 und die Radfläche 2 am gegenüberliegenden Ende 12 der Arretierfläche auseinander, sodass eine Keilform entsteht. Auf die Geometrie des Radkeils wird in Figur 3 näher eingegangen.

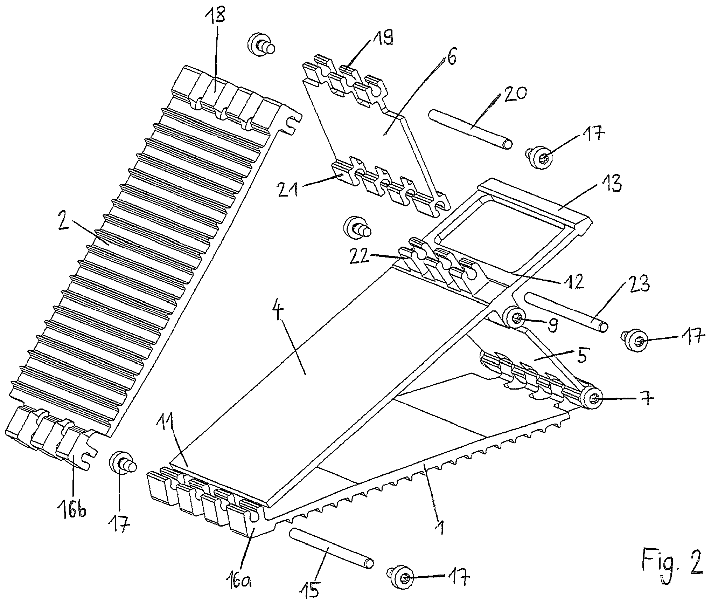

Figur 2 zeigt eine teilweise Explosionsdarstellung des Radkeils aus Figur 1 aus der die einzelnen Bauteile ersichtlich sind. Dabei ist der Bereich der Radfläche 2 als Explosionsansicht gezeigt und der Bereich der Bodenfläche 1 in zusammengebautem Zustand dargestellt, wie in Figur 1.

Bodenfläche 1 und Radfläche 2 sind im Wesentlichen identisch ausgestaltet. Sie sind als starre Aluminiumplatten vorgesehen und weisen an ihren als Aussenflächen des Radkeils vorgesehenen Seiten eine Riffelung auf. Die Riffelung unterstützt einen sicheren Halt am Boden und an einem zu blockierenden Rad. Das Scharnier 3 ist als Stabscharnier mit einem Stab 15 vorgesehen. An einem Enden von Bodenfläche 1 und Radfläche 2 sind Scharnierblöcke 16a und 16b mit einer Lagerdurchführung vorgesehen, die als Lagerung für den Stab 15 dienen. In zusammengebautem Zustand greifen die Scharnierblöcke 16a und 16b zwischen einander und der Stab 15 verläuft durch die Lagerdurchführungen der Scharnierblöcke 16a und 16b. Der Stab 15 wird mittels Fixierschrauben 17 in den Scharnierblöcken 16a und 16b fixiert.

Für die Gelenke 7 und 8 sind am anderen Ende der Bodenfläche 1 und der Radfläche 2 Gelenkblöcke 18 vorgesehen, die mit Gelenkblöcken 19 am ersten Stützträger 5, bzw. am zweiten Stützträger 6, zusammenwirken. Die Gelenkblöcke 18 und 19 weisen jeweils Lagerdurchführungen auf. Ein Stab 20 verläuft durch die Lagerdurchführungen und verbindet die Gelenkblöcke 18 und 19, so dass die Gelenke 8 und 7 entstehen. Weiter weisen die Stützträger 5 und 6 an ihren zur Arretierfläche 4 ragenden Ende Gelenkblöcke 21 auf. Die Arretierfläche 4 weist zu beiden Seiten Gelenkblöcke 22 auf, die zwischen die Gelenkblöcke 21 greifen können. Die Gelenkblöcke 21 und 22 weisen wiederum Lagerdurchführungen auf. Durch einen Stab 23 werden die Gelenkblöcke 21 und 22 verbunden, so dass die Gelenke 9 und 10 entstehen. Die Stäbe 20 und 23 werden wiederum durch Fixierschrauben 17 in den Gelenklagern der Gelenkblöcke gesichert.

In Figur 3 ist die Geometrie des Radkeils in einer Arretierstellung in aufgefaltetem Zustand gezeigt. Ein Kraftvektor F zeigt die Krafteinwirkung von einem Rad auf die Radfläche 2 des Radkeils. Der Kraftvekotr F wirkt in Richtung der Normalen der Radfläche 2. Er schliesst mit dem Stützträger 6 einen Winkel derart ein, dass die Arretierfläche 4 in die Arretierstellung gezwungen ist, in der ihr Ende 11 gegen den Anschlag 14 stösst. Hierfür ist ein Winkel α zwischen Kraftvektor F und dem Stützträger 6 auf der Seite des Arretierflächenendes 11 kleiner als 180°. Die Kraft des Kraftvektor F erzeugt im Stützträger 6 eine Kraftkomponente K, die auf die Arretierfläche 4 einwirkt. Der Winkel β zwischen dem Stützträger 6, bzw. der Kraftkomponente K, und der Arretierfläche 4 ist grösser als 90°. Daher wird die Kraftkomponente K in eine Vorschubkraft V transformiert, welche die Arretierfläche 4 in Richtung des Anschlags 14 presst. Durch eine Belastung der Radfläche 2 wird deshalb die Arretiereinrichtung des Radkeils in der Arretierstellung gesichert. Ein analoger Kraftverlauf entsteht zwischen der Bodenfläche 1, dem Stützträger 5 und der Arretierfläche 4.

In der vorliegenden Ausführungsform weisen die Bodenfläche 1 und die Radfläche 2 z. B. eine Länge von 220 mm und die Arretierfläche 4 eine Länge von 234,8 mm auf. Der Winkel α beträgt 148° und der Winkel β 99.5°. Diese Werte sind jedoch lediglich beispielhaft, es sind auch andere Winkel unter 180° für α und über 90° für β und andere Längen möglich.

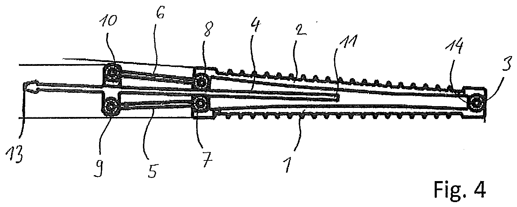

In Figur 4 ist der Radkeil in seiner Faltposition gezeigt. Die Arretierfläche 4 ist relative zu Bodenfläche 1 und Radfläche 2 herausgezogen, so dass ihr Ende 11 vom Anschlag 14 am Scharnier 3 entfernt ist. Die Stützträger 5 und 6 erstrecken sich annähernd parallel zur Arretierfläche 4, wobei die Gelenke 7 und 8 auf der Arretierfläche 4 aufliegen. Die Bodenfläche 1 und die Radfläche verlaufen zumindest annähernd parallel zu einander. Der Radkeil ist in einem zusammen geklappten, flachen Zustand, in dem er leicht verstaut und auf anderen zusammen geklappten Radkeilen gelagert werden kann.

Es wird betont, dass neben der in den Figuren gezeigten Ausführungsform auch andere Ausgestaltungen des Radkeils mit den Merkmalen der Erfindung möglich sind. Beispielsweise kann nur ein Stützträger vorgesehen sein, der in der beschriebenen Weise zwischen Boden- oder Radfläche und der Arretierfläche gelagert ist. Die jeweils andere von Boden- oder Radfläche kann dann z. B. gleitend auf der Arretierfläche aufliegen. Die Arretierfläche kann ebenfalls zwischen Boden- und Arbeitsfläche verschoben und in Anschlag mit dem Scharnier gebracht werden. Allerdings ist der Keilwinkel bei dieser Ausgestaltung nur halb so gross, wie in der gezeigten Ausführungsform. Ferner muss der Anschlag nicht am Scharnier ausgebildet sein. Es können z. B. auch Kanten auf der Innenseite von Boden- oder Radfläche vorgesehen sein, die als Anschlag für das Ende der Arretierfläche dienen können. Es ist denkbar eine Serie von Kanten vorzusehen, sodass ein Winkel des Radkeils variabel ist, je nachdem an welcher Kante die Arretierfläche arretiert wird. Weitere Variationen eine Radkeils nach der Erfindung sind denkbar.

### Bezugszeichenlegende

- 1: Bodenfläche
- 2: Radfläche
- 3: Scharnier
- 4: Arretierfläche
- 5: erster Stützträger
- 6: zweiter Stützträger
- 7: Gelenk
- 8: Gelenk
- 9: Gelenk
- 10: Gelenk
- 11: erstes Ende Arretierfläche
- 12: zweites Ende Arretierfläche
- 13: Griff
- 14: Anschlag
- 15: Stab
- 16: Scharnierblöcke
- 17: Fixierschrauben
- 18: Gelenkblöcke
- 19: Gelenkblöcke
- 20: Stab
- 21: Gelenkblöcke
- 22: Gelenkblöcke
- 23: Stab
- K: Kraftkomponente
- V: Vorschub
- F: Kraftvektor

## Patentansprüche

1. Radkeil zum Blockieren eines stehenden Rades, der eine Bodenfläche (1) zur Auflage auf einem Boden und eine Radfläche (2) zur Anlage am Rad aufweist, wobei die Radfläche (2) zum Blockieren des Rades gewinkelt zur Bodenfläche (1) vorgesehen ist und Bodenfläche (1) und Radfläche (2) über ein Scharnier (3) miteinander verbunden und faltbar ausgestaltet sind, wobei
- eine Arretiereinrichtung an der Bodenfläche (1) und/oder der Radfläche (2) beweglich angeordnet ist, die in einer Arretierstellung Bodenfläche (1) und Radfläche (2) in einem aufgefalteten, gewinkelten Zustand arretiert,
- wobei die Arretiereinrichtung eine starre Arretierfläche (4) und wenigstens einen Stützträger (5) aufweist, der an einem Ende gelenkig an der Arretierfläche (4) und am anderen Ende gelenkig an Boden- bzw. Radfläche (1; 2) gelagert ist, so dass in einer Faltposition die Arretierfläche (4) zumindest annähernd parallel zu Boden- bzw. Radfläche (1; 2) und in der Arretierstellung Arretierfläche (4), Stützträger (5) und Boden- bzw. Radfläche (1; 2) dreieckförmig angeordnet sind, **dadurch gekennzeichnet,**
- **dass** das Scharnier (3) zwischen Bodenfläche (1) und Radfläche (2) einen Anschlag (14) bildet, so dass in der Arretierstellung die Arretierfläche (4) mit einem Ende (11) am Scharnier (3) anschlägt und in der Faltposition dieses Ende (11) vom Scharnier (3) entfernt ist.

2. Radkeil nach Anspruch 1, **dadurch gekennzeichnet, dass** die Arretiereinrichtung wenigstens einen Stützträger (5) aufweist, der gelenkig an Boden- oder Radfläche (1; 2) angeordnet ist und in einer Arretierstellung die Bodenfläche (1) und die Radfläche (2) gewinkelt zueinander abstützt.

3. Radkeil nach einem der vorhergehenden Ansprüche, **dadurch gekennzeichnet, dass** zwei Stützträger (5, 6) vorgesehen sind, die jeweils mit einem Ende an gegenüberliegenden Seiten der Arretierfläche (4) gelagert sind, und ein erster Stützträger (5) mit seinem anderen Ende an der Bodenfläche (1) und ein zweiter Stützträger (6) mit seinem anderen Ende an der Radfläche (2) gelagert sind.

4. Radkeil nach einem der vorhergehenden Ansprüche, **dadurch gekennzeichnet, dass** ein Kraftvektor (F) in Richtung der Normalen der Radfläche (2) mit dem wenigstens einen Stützträger (6) einen Winkel derart einschliesst, dass die Arretiereinrichtung in eine Arretierstellung gezwungen ist.

5. Radkeil nach Anspruch 3 und 4, **dadurch gekennzeichnet, dass** in der Arretierstellung ein Winkel zwischen den Stützträgern und der Arretierfläche grösser als 90° ist.

6. Radkeil nach einem der vorhergehenden Ansprüche, **dadurch gekennzeichnet, dass** wenigstens die Radfläche (2) aus Aluminium besteht und vorzugsweise der gesamte Radkeil aus Aluminium besteht.

7. Radkeil nach einem der vorhergehenden Ansprüche, **dadurch gekennzeichnet, dass** der Radkeil aus einem rostfreien Metall oder einem Kompositwerkstoff besteht.

8. Radkeil nach einem der vorhergehenden Ansprüche, **dadurch gekennzeichnet, dass** der Radkeil auf der Bodenfläche (1) Spikes aufweist, vorzugsweise Spikes aus Hartmetall.

9. Radkeil nach einem der vorhergehenden Ansprüche, **dadurch gekennzeichnet, dass** die Arretierfläche (4) an ihrem dem Anschlagende (11) gegenüberliegenden Ende (12) einen Griff (13) aufweist, der in der Arretierstellung und in der Faltposition über die Bodenfläche (1) und die Radfläche (2) hinaussteht.

10. Radkeil nach einem der vorhergehenden Ansprüche, **dadurch gekennzeichnet, dass** die Arretierfläche (4) eine lösbare Sicherungsverbindung umfasst, die sich zur Sicherung der Arretierfläche in der Arretierstellung von der Arretierfläche (4) in Richtung des Anschlags (14) erstreckt.

11. Radkeil nach Anspruch 10, **dadurch gekennzeichnet, dass** die Sicherungsverbindung eine elastische Zugverbindung ist.

## Claims

1. Wheel chock for blocking a stationary wheel, which wheel chock comprises a floor surface (1) for resting on a floor and a wheel surface (2) for contacting the wheel, the wheel surface (2) being provided at an angle to the floor surface (1) for blocking the wheel, and the floor surface (1) and the wheel surface (2) being interconnected via a hinge (3) and being foldable,
- a locking device being movably arranged on the floor surface (1) and/or the wheel surface (2), which device, in a locking position, locks the floor surface (1) and the wheel surface (2) in an unfolded, angled state,
- the locking device comprising a rigid locking surface (4) and at least one support beam (5) which, at one end, is mounted on the locking surface (4) in an articulated manner and, at the other end, is mounted on the floor or wheel surface (1; 2) in an articulated manner, so that, in a folding position, the locking surface (4) is arranged at least approximately in parallel with the floor or wheel surface (1; 2) and, in the locking position, the locking surface (4), the support beam (5) and the floor or wheel surface (1; 2) are arranged in a triangular manner, **characterized in that**
- the hinge (3) forms an abutment (14) between the floor surface (1) and the wheel surface (2), so that in the locking position the locking surface (4) abuts the hinge (3) with one end (11), and in the folding position said end (11) is remote from the hinge (3).

2. Wheel chock according to claim 1, **characterized in that** the locking device comprises at least one support beam (5) which is arranged on the floor or wheel surface (1; 2) in an articulated manner and, in a locking position, supports the floor surface (1) and the wheel surface (2) at an angle to one another.

3. Wheel chock according to any of the preceding claims,
**characterized in that** two support beams (5, 6) are provided which in each case are mounted at one end on opposing sides of the locking surface (4), and a first support beam (5) is mounted at its other end on the floor surface (1), and a second support beam (6) is mounted at its other end on the wheel surface (2).

4. Wheel chock according to any of the preceding claims, **characterized in that** a force vector (F) in the direction of the normal of the wheel surface (2) encloses an angle with the at least one support beam (6) in such a way that the locking device is forced into a locking position.

5. Wheel chock according to claims 3 and 4, **characterized in that,** in the locking position, an angle between the support beams and the locking surface is greater than 90°.

6. Wheel chock according to any of the preceding claims, **characterized in that** at least the wheel surface (2) consists of aluminum, and preferably the entire wheel chock consists of aluminum.

7. Wheel chock according to any of the preceding claims, **characterized in that** the wheel chock consists of a stainless metal or a composite material.

8. Wheel chock according to any of the preceding claims,
**characterized in that** the wheel chock comprises spikes on the floor surface (1), preferably spikes made of hard metal.

9. Wheel chock according to any of the preceding claims, **characterized in that** the locking surface (4), at its end (12) opposite the abutment end (11), comprises a handle (13) which protrudes beyond the floor surface (1) and the wheel surface (2) in the locking position and in the folding position.

10. Wheel chock according to any of the preceding claims, **characterized in that** the locking surface (4) has a detachable securing connection which, in order to secure the locking surface in the locking position, extends from the locking surface (4) toward the abutment (14).

11. Wheel chock according to claim 10, **characterized in that** the securing connection is a resilient tensile connection.

## Revendications

1. Cale de roue permettant de bloquer une roue en position verticale, laquelle cale de roue présente une surface pour sol (1) destinée à s'appuyer sur un sol et une surface pour roue (2) destinée à reposer contre la roue, dans laquelle la surface pour roue (2) est prévue de manière angulaire par rapport à la surface pour sol (1) pour bloquer la roue et la surface pour sol (1) et la surface pour roue (2) sont reliées l'une à l'autre par l'intermédiaire d'une charnière (3) et réalisées de manière à pouvoir être pliées, dans laquelle
- un dispositif de maintien est disposé mobile sur la surface pour sol (1) et/ou sur la surface pour roue (2), lequel dispositif de maintien, dans une position de maintien, maintient la surface pour sol (1) et la surface pour roue (2) dans un état angulaire déplié,
- dans laquelle le dispositif de maintien présente une surface de maintien (4) rigide et au moins une entretoise de support (5) qui, à une extrémité, est montée de manière articulée sur la surface de maintien (4) et, à l'autre extrémité, est montée de manière articulée sur la surface pour sol ou pour roue (1 ; 2), de sorte que, dans une position pliée, la surface de maintien (4) est disposée au moins approximativement parallèlement à la surface pour sol ou pour roue (1 ; 2) et, dans la position de maintien, la surface de maintien (4), l'entretoise de support (5) et la surface pour sol ou pour roue (1 ; 2) sont disposées en forme de triangle, **caractérisée en ce que**
- la charnière (3) forme une butée (14) entre la surface pour sol (1) et la surface pour roue (2), de sorte que, dans la position de maintien, la surface de maintien (4) vient en butée avec une extrémité (11) contre la charnière (3) et que, dans la position pliée, ladite extrémité (11) est éloignée de la charnière (3).

2. Cale de roue selon la revendication 1, **caractérisée en ce que** le dispositif de maintien présente au moins une entretoise de support (5) qui est disposée de manière articulée sur la surface pour sol ou pour roue (1 ; 2) et, dans une position de maintien, la surface pour sol (1) et la surface pour roue (2) se supportent mutuellement de manière angulaire.

3. Cale de roue selon l'une des revendications précédentes,
**caractérisée en ce que** deux entretoises de support (5, 6) sont prévues, lesquelles sont respectivement montées avec une extrémité sur des côtés opposés de la surface de maintien (4), et une première entretoise de support (5) est montée sur la surface pour sol (1) avec son autre extrémité et une seconde entretoise de support (6) est montée sur la surface pour roue (2) avec son autre extrémité.

4. Cale de roue selon l'une des revendications précédentes,
**caractérisée en ce qu'**un vecteur de force (F) forme, en direction de la normale de la surface pour roue (2), un angle avec l'au moins une entretoise de support (6), de telle sorte que le dispositif de maintien est contraint dans une position de maintien.

5. Cale de roue selon les revendications 3 et 4, **caractérisée en ce que**, dans la position de maintien, un angle entre les entretoises de support et la surface de maintien est supérieur à 90°.

6. Cale de roue selon l'une des revendications précédentes,
**caractérisée en ce qu'**au moins la surface pour roue (2) est constituée d'aluminium et de préférence l'ensemble de la cale de roue est constitué d'aluminium.

7. Cale de roue selon l'une des revendications précédentes,
**caractérisée en ce que** la cale de roue est constituée d'un métal inoxydable ou d'un matériau composite.

8. Cale de roue selon l'une des revendications précédentes,
**caractérisée en ce que** la cale de roue présente des crampons, de préférence des crampons en métal dur, sur la surface pour sol (1).

9. Cale de roue selon l'une des revendications précédentes,
**caractérisée en ce que** la surface de maintien (4) présente une poignée (13) à son extrémité (12) opposée à l'extrémité de butée (11), laquelle poignée, dans la position de maintien et dans la position pliée, dépasse de la surface pour sol (1) et de la surface pour roue (2).

10. Cale de roue selon l'une des revendications précédentes,
**caractérisée en ce que** la surface de maintien (4) comprend une liaison d'immobilisation amovible qui s'étend depuis la surface de maintien (4) en direction de la butée (14) pour l'immobilisation de la surface de maintien dans la position de maintien.

11. Cale de roue selon la revendication 10, **caractérisée en ce que** la liaison d'immobilisation est une liaison par traction élastique.
